# NOUVEAU FASCICULE DE BREVET EUROPEEN

(11) **EP 0 405 276 B2**
(45) Date de publication et mention de la décision concernant l'opposition: **27.12.1996**
(45) Mention de la délivrance du brevet: 03.11.1993
(21) Numéro de dépôt: 90111431.4
(22) Date de dépôt: 18.06.1990
(51) Int. Cl.: B29D 30/06

(54) **Procédé de moulage d'un pneumatique, et moule pour la mise en oeuvre dudit procédé**
Verfahren und Form zum Formen eines Reifens
Method and mould for moulding a tyre

(30) Priorité: 30.06.1989 FR 8909071
(43) Date de publication de la demande: 02.01.1991
(73) Titulaire: COMPAGNIE GENERALE DES ETABLISSEMENTS MICHELIN - MICHELIN & CIE, 63040 Clermont-Ferrand Cédex (FR)
(72) Inventeur: Lurois, Patrick, F-63118 Cébazat (FR)
(74) Mandataire: Hiebel, Robert

(56) Documents cités:
- DE-A- 2 113 698
- DE-A- 2 303 742
- JP-U-63 182 109
- JP-U-63 182 906
- JIS D 4230 - 1978 "Tyres for Automobiles" pages 805 to 810
- Federal Motor Vehicle Safety Standards, "Code of Federal Regulations - Title 49 - Transportation - Chapter V. - Part 571", 1973, pages S109-1 to S109-18
- United Nations Regulation No. 30, 1958 "Agreement concerning the adoption of uniform conditions of approval and reciprocal recognition of aproval for motor vehicle equipment and parts"
- Regulation of tread wear indication, GEN-6-1A to 9A of JATMA by law

## Description

La présente invention se rapporte au moulage des pneumatiques, notamment des pneumatiques radiaux pour véhicules de tourisme ou pour véhicules dits "Poids Lourds" tels que les camions ou les cars de tourisme. Elle concerne également le moulage de bandes de roulement utilisées en rechapage. En particulier, elle concerne la sculpture des bandes de roulement de ces pneumatiques.

Pour assurer le moulage et la vulcanisation de ces pneumatiques, il est bien connu d'utiliser des moules comprenant deux parties latérales assurant le moulage des flancs, et une couronne annulaire de segments disposés entre les parties latérales, pour assurer le moulage de la bande de roulement. A titre d'exemple, les brevets US 3 847 520 et US 3 779 677 décrivent de tels moules.

A partir de la constatation que certains pneumatiques pour Poids-Lourds, surtout lors de leur utilisation sur des cars de tourisme, provoquaient des vibrations et du bruit dans des fréquences allant de 30 Hz à 150 Hz, on a pu établir que l'origine de ces vibrations devait être imputée au moulage des pneumatiques.

L'objectif de la présente invention est donc de proposer une nouvelle conception pour l'élaboration des moules, afin de faire disparaître les défauts d'uniformité et de non régularité géométrique, de surépaisseur, provoquant des désagréments au point de vue confort dans le véhicule.

Selon l'invention, le procédé de moulage d'un pneumatique ayant une bande de roulement pourvue d'une sculpture, ladite sculpture présentant des blocs de caoutchoucs entourés d'évidements constitués au moins en partie par des rainures, chacun desdits blocs comportant un volume théorique de caoutchouc, ladite bande de roulement étant moulée par un moule à segments, chaque segment étant limité dans le sens circonférentiel par des faces transversales, lesdits segments étant pourvus d'éléments en relief disposés selon l'arrangement voulu pour imprimer les évidements définissant la sculpture de ladite bande de roulement, lesdits éléments en relief définissant sur les segments des zones en creux dont le volume correspond audit volume théorique, certaines desdites zones en creux étant réparties sur deux segments adjacents, est caractérisé en ce que celles desdites zones en creux qui sont réparties sur deux segments adjacents ont un volume supérieur audit volume théorique du bloc correspondant, ledit volume supérieur étant obtenu par un amincissement dans la direction transversale des éléments en relief moulant les rainures orientées approximativement circonférentiellement.

L'invention porte aussi sur tous les moules à segments conçus en respectant les modalités exposées. Elle peut s'appliquer aussi bien pour les moules dont les faces transversales des segments sont radiales, ce qui est le cas le plus fréquent, que pour les moules dont les faces transversales sont parallèles à un motif de sculpture, ou encore pour les moules comportant en outre une séparation médiane circonférentielle définissant deux couronnes adjacentes axialement. Bien entendu, elle s'étend aux pneumatiques produits selon le procédé exposé.

Pour simplifier l'exposé de l'invention, dans la suite, on décrira son application pour une sculpture déterminée, pour pneumatiques pour Poids Lourds, obtenue par moulage au moyen d'un moule à segments, les faces transversales desdits segments étant purement radiales.

Lors de la phase de fermeture du moule, dans une presse de vulcanisation, il est souhaitable que la fermeture du moule intervienne avant de débuter le moulage de la sculpture. En effet, la plupart des sculptures de bande de roulement comportent des sillons continus circonférentiellement, qu'ils soient rectilignes ou non. Pour assurer le moulage de ces sillons, il y a des éléments en reliefs faisant saillie radialement vers l'intérieur, à la surface intérieure des segments puisque ceux-ci comportent ce que l'on appelle communément le négatif de la sculpture à mouler. De par la constitution "en segments" de la couronne de moulage de la bande de roulement, ces éléments en relief sont interrompus au niveau des faces transversales des segments, encore appelées "plans de joint des segments". Dès lors, si l'on débute le moulage avant que les segments ne soient tous jointifs, c'est à dire avant la fermeture complète du moule, on risque d'emprisonner du caoutchouc entre les segments des moules, au moins au niveau des éléments en reliefs.

Si, pour éviter ce problème, on construit le pneumatique de telle sorte que, à l'état cru, la surface extérieure de la bande de roulement se situe à un niveau radial juste inférieur aux éléments en relief du moule lorsque celui-ci est fermé, alors le supplément de conformation rendu nécessaire pour que le pneumatique atteigne les dimensions finales provoque des glissements des fils de renforcements (nappes de carcasses et nappes de sommet), des changements d'angles que forment ces fils les uns par rapport aux autres. En outre, ce supplément de conformation peut être rendu impossible dans le cas de renforts filiformes disposés sous la bande de roulement, à 0° par rapport à un plan perpendiculaire à l'axe de rotation.

De ce fait, on est en général conduit bien souvent à dimensionner un pneumatique à l'état cru de telle sorte que le début de la pénétration des éléments en reliefs des segments du moule dans le caoutchouc de la bande de roulement se produise avant que le moule ne soit complètement fermé.

Ceci fait apparaître un défaut qui n'avait jamais été observé jusqu'à présent, dans le cas des sculptures comportant des blocs de caoutchouc entourés de toutes parts par des évidements. Dans la suite de l'exposé, on appellera ces évidements "rainures" si leur largeur est supérieure à 2 mm, et on les appelera "incisions" dans le cas contraire. Bien souvent ces incisions se ferment lorsque le pneumatique est gonflé, elles se ferment au moins dans l'aire de contact avec la route, alors que les rainures sont prévues avant tout pour évacuer l'eau par temps de pluie, et doivent donc rester ouvertes.

Quel que soit le type d'évidements, le problème de moulage survient lorsque la sculpture comporte donc des blocs entourés de toutes parts par des évidements. Au niveau des plans de joint entre les segments, on répartit en général les évidements correspondant aux blocs de caoutchouc sur les deux segments adjacents. Ceci limite l'apparition des bavures évoquées ci-dessus, et aussi simplifie la constitution des segments et la commande des mouvements de la presse de vulcanisation.

On a constaté que les vibrations incriminées correspondaient à un défaut de circularité du pneumatique d'harmonique H6 à H16 correspondant au nombre de segments du moule.

On a constaté qu'un défaut de régularité géométrique peut même apparaître lorsque la sculpture comporte des blocs liés entre eux par des ponts de caoutchouc, notamment lorsque la sculpture comporte de larges sillons circonférentiels, et des incisions ou des rainures disposés transversalement, sans que ces incisions ou rainures ne traversent la nervure de caoutchouc de part en part. Donc plus généralement, il n'est pas nécessaire que les blocs soient entourés de toutes parts d'évidements ; dès que les éléments du moule assurant le moulage de la sculpture constituent une entrave aux mouvements de caoutchouc non encore vulcanisé, dans la direction circonférentielle, par blocage total ou à tout le moins en provoquant une perte de charge suffisamment importante pour limiter l'écoulement, donc le transfert de masse, il apparaît des défauts géométriques ayant des conséquences préjudiciables en service.

Comme autre exemple, on a constaté, sur certains pneumatiques pour véhicules de tourisme des usures différentes aux endroits de la bande de roulement correspondant aux joints entre segments par rapport aux endroits de la bande de roulement correspondant aux centres des segments.

Les figures jointes permettent de bien comprendre l'invention en en donnant une illustration non limitative.
Les figures 1 à 3 schématisent le moulage de la sculpture de la bande de roulement d'un pneumatique ;
La figure 4 illustre une sculpture au niveau du plan de joint entre segments ;
La figure 5 est une coupe selon 1-1 à la figure 4 ;
La figure 6 est une coupe selon 2-2 à la figure 4 ;
Les figures 7 et 8 sont des schémas semblables à celui de la figure 4 illustrant deux autres sculptures suivant l'invention.

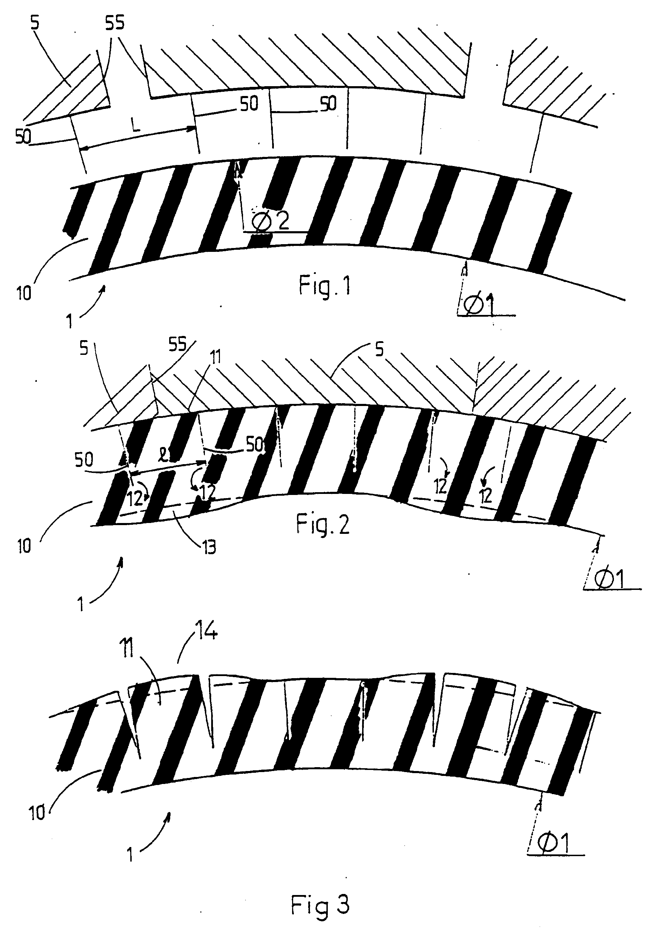

Les figures 1 à 3 sont des coupes perpendiculaires à l'axe de rotation. Elles schématisent un pneumatique 1 dont le diamètre ⌀₁ correspond sensiblement au diamètre de la ceinture, et dont le diamètre ⌀₂, mesuré à la surface de la bande de roulement 10 à l'état cru, correspond approximativement au diamètre extérieur final du pneumatique vulcanisé.

On aperçoit également les segments 5 d'un moule, portant des éléments en relief 50 qui assurent le moulage d'évidements sur la bande de roulement. Les segments 5 sont limités par des faces transversales 55 orientées radialement, et l'on considère que la sculpture de la bande de roulement 10 comporte des sillons circonférentiels, moulés par des éléments circonférentiels correspondants sur les segments (non représentés).

A la figure 1, on voit très bien que lorsque les éléments 50 vont commencer à pénétrer dans le caoutchouc de la bande de roulement 10, les segments 5 sont encore écartés l'un de l'autre.

Lorsque le moule comporte des éléments 50 en relief orientés transversalement, ceux de ces éléments 50 adjacents aux faces transversales 55 des segments 5, puisqu'ils pénètrent dans le caoutchouc avant la fermeture complète de maule, le font alors qu'ils sont encore écartés dans le sens circonférentiel d'une distance L supérieure à celle ℓ correspondant à la position de fermeture du moule. Ils ont donc tendance à emprisonner un volume de caoutchouc cru supérieur au volume théorique du bloc 11 correspondant sur la bande de roulement 10.

Lors de la fabrication du pneumatique à l'état cru, le caoutchouc non vulcanisé est réparti régulièrement sur la bande de roulement dans le sens circonférentiel. Le volume global de caoutchouc est bien entendu conditionné par le volume global de tous les blocs de caoutchouc constituant la sculpture de la bande de roulement lorsque le pneumatique est moulé et vulcanisé. Pour chaque bloc, le volume théorique de caoutchouc est déterminé par la forme précise que le concepteur de la sculpture souhaite donner audit bloc 11 : surface du bloc, profondeur de la sculpture, mais aussi forme de la dépouille pour les rainures, et considérations imposées par la technique du pas variable. Lorsque l'on parle de volume théorique, il s'agit de volume du bloc idéal considéré, situé au niveau du joint entre segments 5 et non pas d'une référence de volume prise pour un bloc situé ailleurs dans la sculpture.

Ainsi, le volume de caoutchouc étant supérieur à ce qu'il faudrait mouler, l'excès de volume provoque une déformation du pneumatique radialement vers l'intérieur par un mouvement de caoutchouc schématisé par les flèches 12, notamment un déplacement 13 de la structure de renforcement (ceinture) du sommet radialement vers l'intérieur, ce que permet la membrane souple de moulage de la cavité intérieure du pneumatique, alors que toute déformation radialement vers l'extérieur est interdite par la rigidité du moule.

Après montage et gonflage d'un pneumatique ainsi vulcanisé, c'est la ceinture de renforcement qui va imposer le développement et la forme finale effective du pneumatique. Donc sous l'effet de la pression de gonflage, qui est élevée pour les pneumatiques considérés, la ceinture va prendre une forme parfaitement circulaire, vue en coupe par un plan perpendiculaire à l'axe de rotation du pneumatique (figure 3). Dès lors, le volume excédentaire de tous les blocs de caoutchouc au niveau des plans de joints entre segments va provoquer un bossage 14, donc un défaut de circularité au niveau de la surface de la bande de roulement. Au roulage, cela provoque des vibrations nettement perceptibles, même pour des défauts de l'ordre de 0,2 mm en excès sur le rayon pour un rayon global de 500 mm pour l'exemple considéré, à savoir dans le cas des pneumatiques pour Poids Lourds.

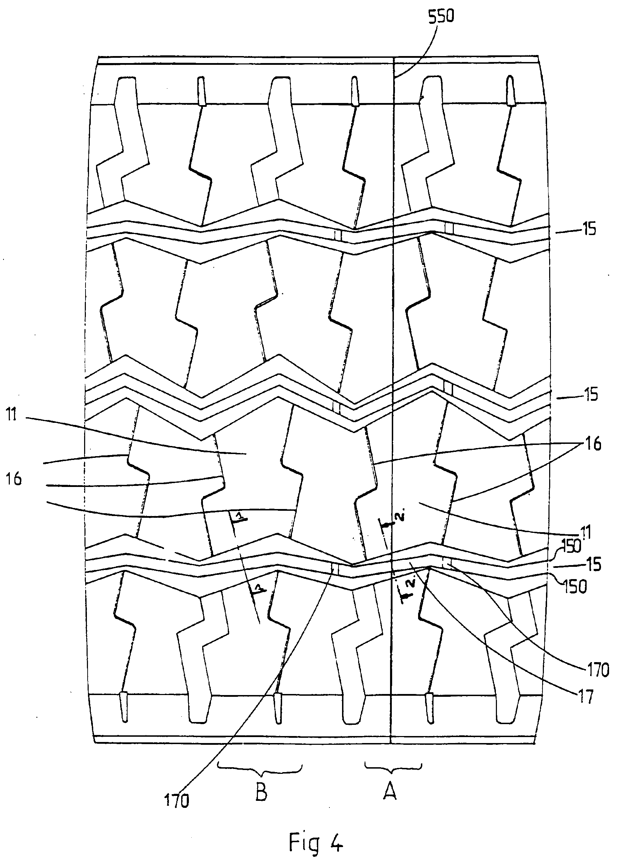

Pour éviter l'apparition de ces bossages dans les sculptures apparaissant aux figures 4 et suivantes, il est donc proposé, selon l'invention, de reporter l'excédent de volume transversalement, et non plus radialement, par exemple en amincissant les éléments du moule en relief, bordant la zone en creux répartie sur deux segments adjacents. En général, cela conduit donc à, localement, diminuer le taux d'entaillement de la sculpture, donc à augmenter transversalement la surface du bloc de caoutchouc par rapport à sa surface théorique telle qu'elle résulte de la conception de la sculpture, notamment des considérations dictant la conception en pas variable. On peut aussi diminuer la hauteur desdits éléments en relief, par exemple en plaçant judicieusement les indicateurs d'usure.

Aux figures 4, 5 et 6, on aperçoit une sculpture de pneumatique, constituée de trois rainures 15 orientées circonférentiellement, et comportant de nombreuses incisions 16 disposées transversalement. Dans le cas considéré, les blocs 11 ainsi définis se retrouvent régulièrement à l'identique dans la sculpture, qui est donc dite "à pas constant". Le volume théorique du bloc 11 dans la zone A est identique au volume théorique du bloc 11 dans la zone B.

Aux figures 4 à 8, on voit que l'amincissement concerne les éléments en relief moulant les rainures orientées circonférentiellement. On a constaté que l'on obtient de bons résultats lorsque le rapport du volume des zones en creux répartis audit volume théorique est compris entre 1.01 et 1.10, et de préférence entre 1.025 et 1.05.

Le fond de la rainure 15 est constitué par un arrondi dont les lignes 150 matérialisent la rencontre avec les flancs 110 des blocs 11. La ligne 550 est la trace du joint entre segments 5 du moule.

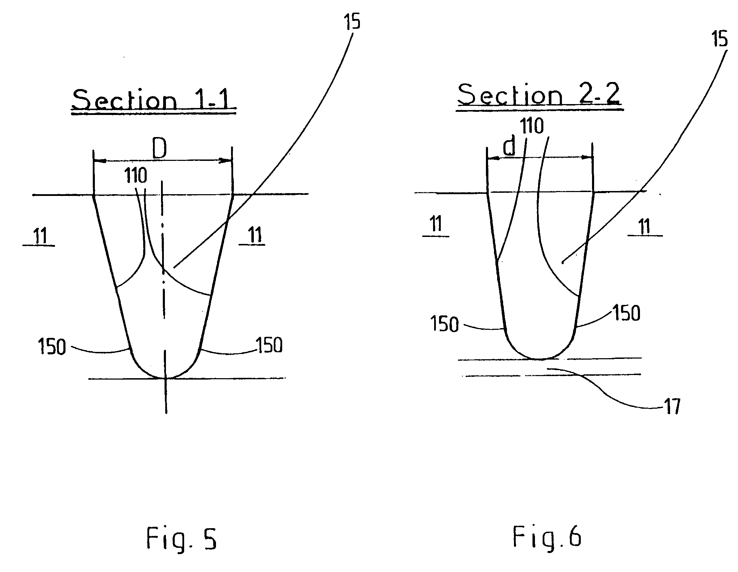

Selon l'invention, il faut prévoir, dans la zone A, un volume de moulage pour les blocs 11 correspondants supérieur au volume théorique. On atteint ce but par un amincissement des rainures, dont la largeur d dans la zone A (figure 6) est inférieure à la largeur D dans la zone B, ou plus généralement en dehors des joints des segments (figure 5). En outre, on dispose les témoins d'usure 17 dans ladite zone A ; ils sont donc répartis sur deux segments adjacents, ce qui permet d'utiliser une partie de l'excès de volume de caoutchouc pour les constituer . Le témoin d'usure 17 est constitué, sur la bande de roulement du pneumatique, par une surépaisseur de caoutchouc au fond des rainures 15, limitée par des bords légèrement inclinés 170.

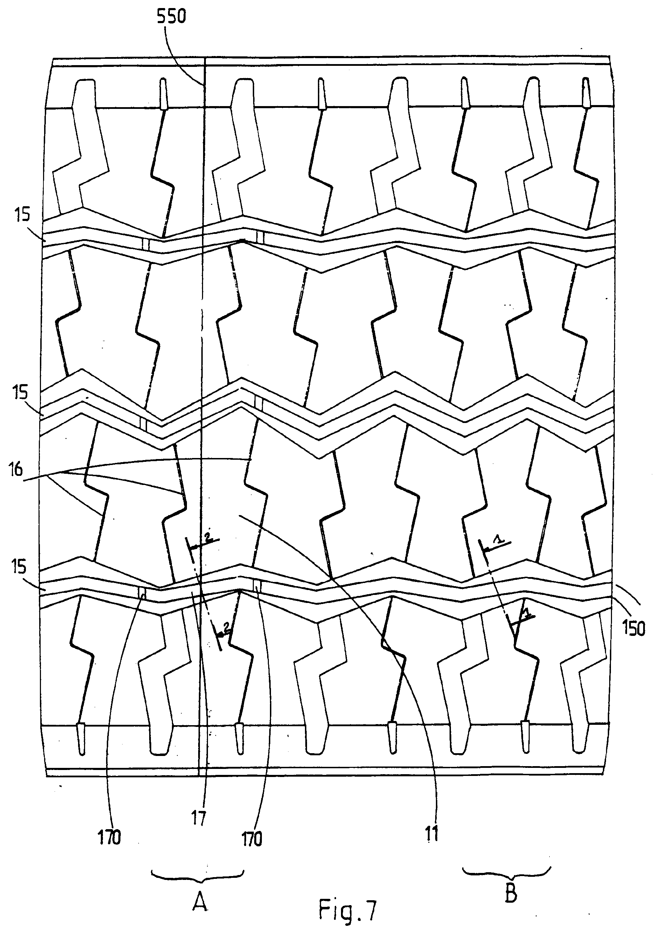

La réalisation illustrée par la figure 7 ne diffère de celle illustrée par les figures 5 à 6 que par le caractère variable du pas de la sculpture. En comparant les zones A et B, on retrouve un amincissement de même nature de la rainure 15 au droit du joint 550 entre segments, ainsi que la localisation des témoins d'usure 17 au même endroit

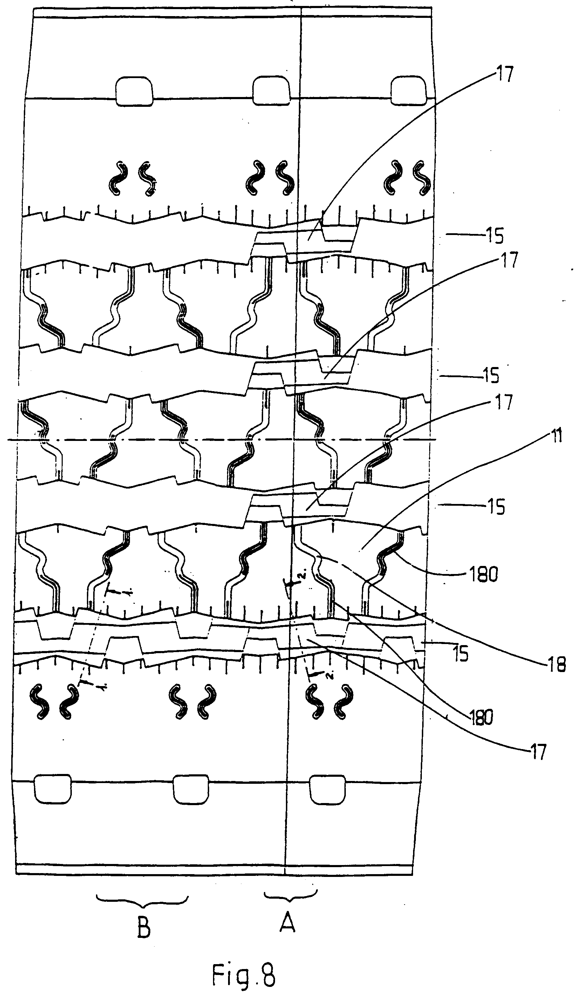

A la figure 8, on aperçoit que les blocs 11 sont limités transversalement parde petites rainures 18 peu profondes, prolongées partiellement par des incisions 180. Ces dernières ne se développent que sur une partie seulement (environ 50 % dans l'illustration) de la distance séparant deux rainures 15 adjacentes. Pour empêcher l'apparition de défauts de géométrie, on retrouve là encore un amincissement local (zone A) de chaque rainure 15, ainsi que la localisation des témoins d'usure 17 dans la même zone A.

## Revendications

1. Procédé de moulage d'un pneumatique ayant une bande de roulement (10) pourvue d'une sculpture, ladite sculpture présentant des blocs (11) de caoutchouc entourés d'évidements constitués au moins en partie par des rainures (15), chacun desdits blocs (11) comportant un volume théorique de caoutchouc, ladite bande de roulement (10) étant moulée par un moule à segments (5), chaque segment (5) étant limité dans le sens circonférentiel par des faces transversales, lesdits segments (5) étant pourvus d'éléments en relief (50) disposés selon l'arrangement voulu pour imprimer les évidements définissant la sculpture de ladite bande de roulement (10), lesdits éléments en relief définissant sur les segments (5) des zones en creux dont le volume correspond audit volume théorique, certaines desdites zones en creux étant réparties sur deux segments (5) adjacents, caractérisé en ce que celles desdites zones en creux qui sont réparties sur deux segments (5) adjacents ont un volume supérieur audit volume théorique du bloc correspondant, ledit volume supérieur étant obtenu par un amincissement dans la dimension transversale des éléments en relief moulant des rainures (15) orientées approximativement circonférentiellement.

2. Procédé selon la revendication 1, caractérisé en ce que le rapport dudit volume des zones en creux réparties audit volume théorique est compris entre 1,01 et 1,10 .

3. Procédé selon l'une des revendications 1 ou 2, caractérisé en ce que l'on dispose des témoins d'usure (17) sur les éléments en relief moulant les rainures (15) approximativement circonférentielles, de sorte qu'ils soient répartis sur deux segements ajacents (5).

4. Moule à segments, pour le moulage d'un pneumatique ayant une bande de roulement (10) pourvue d'une sculpture, ladite sculpture présentant des blocs (11) de caoutchoucs entourés d'évidements constitués au moins en partie par des rainures (15), chacun desdits blocs (1) comportant un volume théorique de caoutchouc, ladite bande de roulement (10) étant moulée par un moule à segments (5), chaque segment (5) étant limité dans le sens circonférentiel par des faces transversales, lesdits segments (5) étant pourvus d'éléments (50) en relief disposés selon l'arrangement voulu pour imprimer les évidements définissant la sculpture de ladite bande de roulement (10), lesdits éléments en relief (50) définissant sur les segments (5) des zones en creux dont le volume correspond audit volume théorique, certaines desdites zones en creux étant réparties sur deux segments adjacents, caractérisé en ce que celles desdites zones en creux qui sont réparties sur deux segments (5) adjacents ont un volume supérieur audit volume théorique du bloc correspondant, ledit volume supérieur étant obtenu par un amincissement dans la dimension transversale des éléments en relief moulant les rainures (15) orientées approximativement circonférentiellement.

5. Moule selon la revendication 4, caractérisé en ce que le rapport dudit volume des zones en creux réparties audit volume théorique est compris entre 1.01 et 1.10 .

6. Moule selon la revendication 4 ou 5, caractérisé en ce que l'on dispose des témoins d'usure (17) sur les éléments en relief roulant les rainures (15) approximativement circonférentielles, de sorte qu'ils soient répartis sur deux segments ajacents.

## Claims

1. A method of moulding a tyre having a tread (10) provided with a pattern, said pattern having blocks (11) of rubber surrounded by recesses formed at least in part by grooves (15), each of said blocks (11) having a theoretical volume of rubber, said tread (10) being moulded by a segment mould, each segment (5) being limited in the circumferential direction by transverse faces, said segments (5) being provided with elements in relief (50) disposed in accordance with the arrangement desired in order to impress the recesses defining the pattern of said tread (10), said elements in relief defining on the segments (5) recessed zones the volume of which corresponds to said theoretical volume, some of said recessed zones being distributed over two adjacent segments (5), characterised in that those of said recessed zones which are distributed over two adjacent segments (5) have a volume greater than said theoretical volume of the corresponding block, said greater volume being obtained by thinning in the transverse direction the elements in relief moulding grooves (15) oriented approximately circumferentially.

2. A method according to Claim 1, characterised in that the ratio of said volume of the distributed recessed zones to said theoretical volume is between 1.01 and 1.10.

3. A method according to one of Claims 1 or 2, characterised in that wear indicators (17) are arranged on the elements in relief moulding the approximately circumferential grooves (15) in such a manner that they are distributed over two adjacent segments (5).

4. A segment mould for the moulding of a tyre having a tread (10) provided with a pattern, said pattern having blocks (11) of rubber surrounded by recesses formed at least in part by grooves (15), each of said blocks (11) comprising a theoretical volume of rubber, said tread (10) being moulded by a segment mould (5), each segment (5) being limited in the circumferential direction by transverse faces, said segments (5) being provided with elements (50) in relief disposed in accordance with the arrangement desired in order to impress the recesses defining the pattern of said tread (10), said elements (50) in relief defining on the segments (5) recessed Zones the volume of which corresponds to said theoretical volume, some of said recessed zones being distributed over two adjacent segments, characterised in that those of said recessed zones which are distributed over two adjacent segments (5) have a volume greater than said theoretical volume of the corresponding block, said greater volume being obtained by thinning in the transverse direction the elements in relief moulding the grooves (15) oriented approximately circumferentially.

5. A mould according to Claim 4, characterised in that the ratio of said volume of the distributed recessed zones to said theoretical volume is between 1.01 and 1.10.

6. A mould according to Claim 4 or 5, characterised in that wear indicators (17) are arranged on the elements in relief moulding the approximately circumferential grooves (15) in such a manner that they are distributed over two adjacent segments.

## Patentansprüche

1. Verfahren zur Formung eines Reifens mit einer profilierten Lauffläche (10), wobei das Profil von Aussparungen umgebene Gummiblöcke (11) aufweist, wobei die Aussparungen zumindest teilweise aus Rillen (15) bestehen, wobei jeder der Blöcke (11) ein theoretisches Gummivolumen umfaßt, wobei die Lauffläche (10) durch eine Segmentform (5) geformt wird, von der jedes Segment (5) in Umfangsrichtung durch Querseiten begrenzt ist, wobei die Segmente (5) mit vorspringenden Elementen (50) versehen sind, die entsprechend der zum Einprägen der das Profil der Lauffläche (10) definierten Aussparungen erwünschten Anordnung angeordnet sind, wobei die vorspringenden Elemente auf den Segmenten (5) ausgesparte Bereiche definieren, deren Volumen dem theoretischen Volumen entspricht, wobei manche der ausgesparten Bereiche auf zwei benachbarte Segmente (5) vrteilt sind,
**dadurch gekennzeichnet,**
daß die auf zwei benachbarte Segmente (5) verteilten ausgesparten Bereiche ein größeres Volumen als das theoretische Volumen des entsprechenden Blocks haben, wobei das größere Volumen durch eine Verjüngung in Querrichtung der vorspringenden Elemente, die die ungefähr in Umfangsrichtung orientierten Rillen (15) formen, erhalten wird.

2. Verfahren nach Anspruch 1, dadurch gekennzeichnet, daß das Verhältnis des Volumens der aufgeteilten ausgesparten Bereiche zum theoretischen Volumen zwischen 1,01 und 1,10 liegt.

3. Verfahren nach einem der Ansprüche 1 oder 2, dadurch gekennzeichnet, daß die Abnutzungsanzeiger (17) an den die ungefähr in Umfangsrichtung verlaufenden Rillen (15) formenden vorspringenden Elementen angeordnet werden, so daß sie auf zwei benachbarte Segmente (5) verteilt werden.

4. Segmentform zur Formung eines Reifens mit einer profilierten Lauffläche (10), wobei das Profil von Aussparungen umgebene Gummiblöcke (11) aufweist, wobei die Aussparungen zumindest teilweise aus Rillen (15) bestehen, wobei jeder der Blöcke (11) ein theoretisches Gummivolumen umfaßt, wobei die Lauffläche (10) durch eine Segmentform (5) geformt wird, von der jedes Segment (5) in Umfangsrichtung durch Querseiten begrenzt ist, wobei die Segmente (5) mit vorspringenden Elementen (50) versehen sind, die entsprechend der zum Einprägen der das Profil der Lauffläche (10) definierten Aussparungen erwünschten Anordnung angeordnet sind, wobei die vorspringenden Elemente auf den Segmenten (5) ausgesparte Bereiche definieren, deren Volumen dem theoretischen Volumen entspricht, wobei manche der ausgesparten Bereiche auf zwei benachbarte Segmente (5) verteilt sind,
**dadurch gekennzeichnet,**
daß die auf zwei benachbarte Segmente (5) verteilten ausgesparten Bereiche ein größeres Volumen als das theoretische Volumen des entsprechenden Blocks haben, wobei das größere Volumen durch eine Verjüngung in Querrichtung der vorspringenden Elemente, die die ungefähr in Umfangsrichtung orientierten Rillen (15) formen, erhalten wird.

5. Form nach Anspruch 4, dadurch gekennzeichnet, daß das Verhältnis des Volumens der aufgeteilten ausgesparten Bereiche zum theoretischen Volumen zwischen 1,01 und 1,10 liegt.

6. Form nach einem der Ansprüche 4 oder 5, dadurch gekennzeichnet, daß die Abnutzungsanzeiger (17) an den die ungefähr in Umfangsrichtung verlaufenden Rillen (15) formenden vorspringenden Elementen angeordnet sind, so daß sie auf zwei benachbarte Segmente (5) verteilt sind.
